# EUROPEAN PATENT APPLICATION

(11) **EP 3 648 216 A1**
(43) Date of publication of application: **06.05.2020**
(21) Application number: 18825051.8
(22) Date of filing: 20.06.2018
(51) Int. Cl.: H01M 8/04

(54) **FUEL CELL DEVICE**

(30) Priority: 30.06.2017 JP 2017129948; 11.12.2017 JP 2017237199
(71) Applicant: Dainichi Co., Ltd., Niigata city, Niigata 950-1295 (JP); Kyocera Corporation, Kyoto-shi Kyoto 612-8501 (JP)
(72) Inventor: YANAGIUCHI, Shintaro, Niigata city Niigata 950-1295 (JP); KANBAYASHI, Tatsuya, Niigata city Niigata 950-1295 (JP); YOKOO, Naoki, Niigata city Niigata 950-1295 (JP); FUKAGAWA, Tomohiro, Niigata city Niigata 950-1295 (JP); ODAGAWA, Kenichi, Niigata city Niigata 950-1295 (JP); NAKAMURA, Mitsuhiro, Kyoto-shi Kyoto 612-8501 (JP)
(74) Representative: Viering, Jentschura & Partner mbB Patent- und Rechtsanwälte
(86) International application number: PCT/JP2018/023521
(87) International publication number: WO 2019/004031

(57) **Abstract**

The invention relates to a fuel cell device having easy maintainability. The fuel cell device (10) includes: a housing (20) including a top panel (21) and a plurality of side panels (22 to 25); a fuel cell module (1) disposed in the housing (20), the fuel cell module (1) housing a cell stack that carries out power generation by utilizing a fuel gas and an oxygen-containing gas; and a plurality of auxiliary machines that assist operation of the fuel cell module (1). A plurality of panels among the top panel (21) and the plurality of side panels (22 to 25) serve as a maintenance panel that can be detached during maintenance or component replacement, and at least two panels among the top panel (21) and the plurality of side panels (22 to 25) do not serve as the maintenance panel.

## Description

### Technical Field

The present disclosure relates to a fuel cell device.

### Background Art

There is a heretofore known fuel cell device including: a fuel cell module including a container and a cell stack in which a plurality of fuel cells that obtain electric power by utilizing a fuel gas (hydrogen-containing gas) and oxygen-containing gas (air) are stacked, the cell stack being housed in the container; auxiliary machines such as a heat exchanger required to operate the fuel cell module; and an exterior case (casing) in which the fuel cell module and the auxiliary machines are housed.

As the housing for the fuel cell device, a metallic rectangular prism-shaped frame structure (structural member of high strength), five or six sides of which are each surfaced with an exterior panel for protection against rain, wind, etc. by means of screws or otherwise.

Patent Literatures 1 to 3 disclose a construction in which that one of exterior side panels which is located on the foreside (front side), viz., a maintenance worker-accessible front exterior panel, is detachably mounted, and, a fluid connection port for gas, water, etc. used in fuel cells, a vent, and so forth are gathered at this detachable exterior panel (a.k.a. a maintenance panel).

Moreover, Patent Literatures 4 and 5 disclose an exterior case in which four exterior panels in total, including a foreside (front) exterior panel as above described and a top exterior panel, are removable with ease for improvement in maintenance workability.

### Citation List

### Patent Literature

Patent Literature 1: Japanese Unexamined Patent Publication JP-A 2013-191324
Patent Literature 2: Japanese Unexamined Patent Publication JP-A 2016-171005
Patent Literature 3: Japanese Unexamined Patent Publication JP-A 2016-173954
Patent Literature 4: Japanese Unexamined Patent Publication JP-A 2005-251493
Patent Literature 5: Japanese Unexamined Patent Publication JP-A 2013-69634

### Summary of Invention

A fuel cell device according to the disclosure includes: a housing including a top panel and a plurality of side panels; a fuel cell module disposed in the housing, the fuel cell module housing a cell stack that carries out power generation by utilizing a fuel gas and an oxygen-containing gas; and a plurality of auxiliary machines disposed in the housing, the plurality of auxiliary machines assisting operation of the fuel cell module, a plurality of panels among the top panel and the plurality of side panels serving as a maintenance panel that can be detached during maintenance, at least two panels among the top panel and the plurality of side panels not serving as the maintenance panel.

### Brief Description of Drawings

Other and further objects, features, and advantages of the disclosure will be more explicit from the following detailed description taken with reference to the drawings wherein:
FIG. 1 is a block diagram showing the structure of a fuel cell device in accordance with an embodiment;
FIG. 2 is an external perspective view showing a condition of the fuel cell device according to the embodiment, with exterior panels removed;
FIG. 3 is a perspective view showing a condition of the fuel cell device according to the embodiment, with some frames removed;
FIG. 4 is an external perspective view showing a frame structure and exterior panels attached to the frame structure that constitute a housing of the fuel cell device according to the embodiment;
FIG. 5 is an external perspective view showing a condition of the fuel cell device according to the embodiment, with auxiliary machines received in the frame structure;
FIG. 6 is an explanatory drawing of the fuel cell device according to the embodiment, illustrating a spatial region located closer to a maintenance panel on the front side (front maintenance panel);
FIG. 7 is an external perspective view showing another condition of the fuel cell device according to the embodiment, with the exterior panels removed;
FIG. 8 is an external perspective view showing a condition of the fuel cell device according to another embodiment, with exterior panels removed; and
FIG. 9 is a perspective view showing a condition of the fuel cell device according to another embodiment, with some frames removed.

### Description of Embodiments

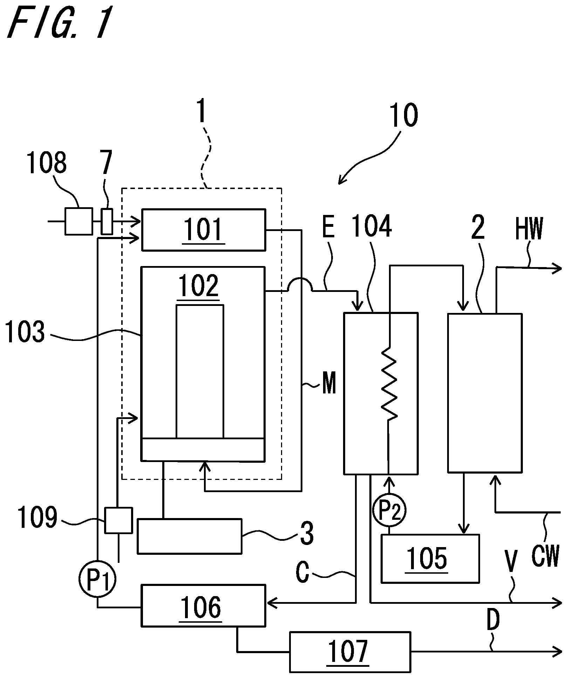

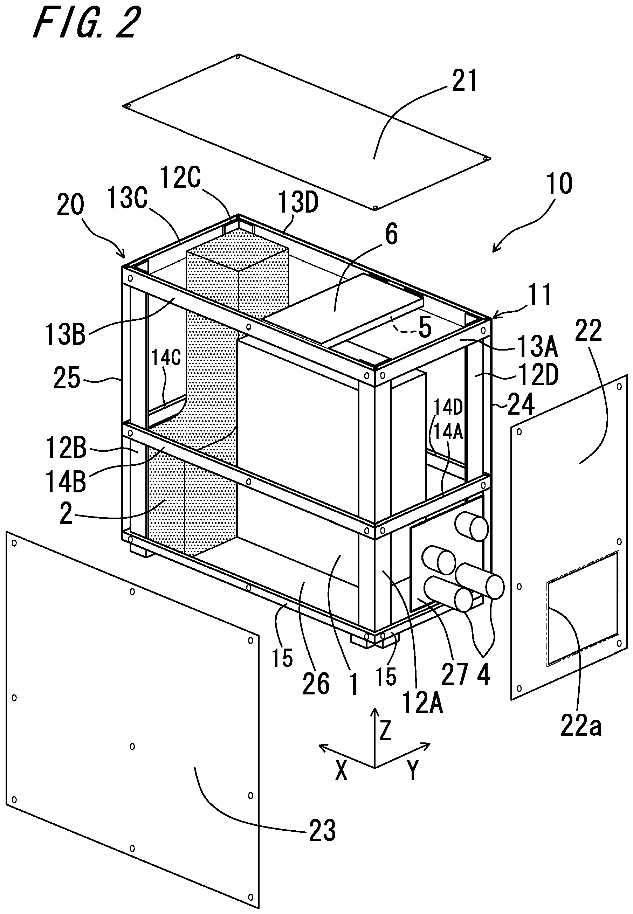

Now referring to the drawings, preferred embodiments of the disclosure are described below. FIG. 1 is a block diagram showing a structural example of a fuel cell device according to the embodiment. The fuel cell device 10 includes: a fuel cell module 1 including thereinside a reformer 101 and a cell stack device 103 including a cell stack 102; and a plurality of auxiliary machines for operating the fuel cell module 1. The plurality of auxiliary machines include a heat exchanger 104, a heat dissipator 105, a condensate water tank 106, a neutralization tank 107, a fuel supply device 108, an air supply device 109, a heat storage tank 2, a power conditioner 3, a desulfurizer 7, etc. The fuel cell module 1 and the respective auxiliary machines are housed in an exterior case (housing 20) as shown in FIGS. 2 to 7.

The reformer 101 is connected with a raw fuel supply pipe for supplying a raw fuel which has been desulfurized by the desulfurizer 7, and a water supply pipe for supplying reformed water. The reformed water is supplied from the condensate water tank 106 to the reformer 101 via a reformed water pump P1. The raw fuel supply pipe (flow channel) is provided with the fuel supply device 108 to convey a raw fuel to the reformer 101.

The raw fuel is made into a hydrogen-containing reformed gas by steam reforming inside the heated reformer 101. After passing through a reformed gas supply pipe M, the reformed gas produced in the reformer 101 is supplied to the cell stack 102. Moreover, externally introduced air is fed to the cell stack 102 via the air supply device 109.

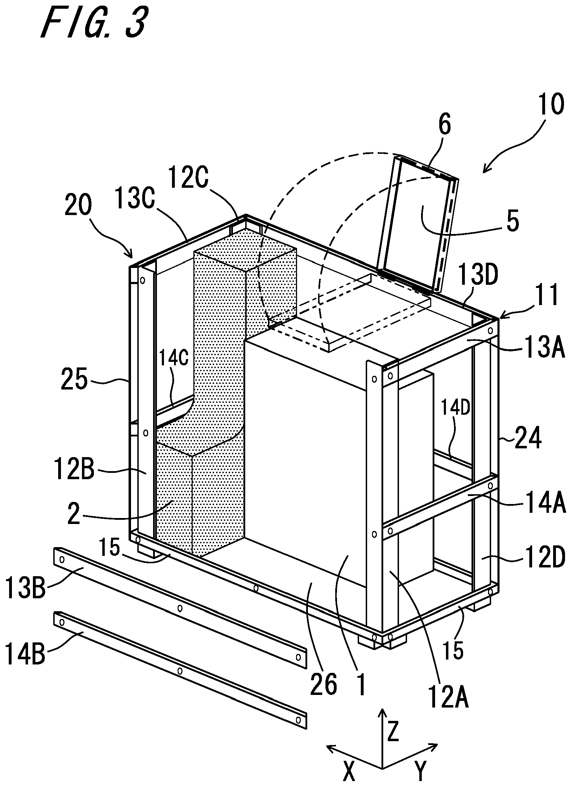

Electricity generated in the fuel cell module 1 is conveyed to the power conditioner 3 for the purposes of preparation for power consumption and power storage in rechargeable batteries, for example. Moreover, there is provided a control substrate 5 (shown in FIGS. 2 and 3) for controlling the fuel cell module 1.

The reformer 101 and the cell stack device 103, being subjected to great heat, are covered with a heat insulator, and then put in a container (refer to reference numeral 1 shown in FIGS. 2 and 3), thereby constituting the fuel cell module 1 placed inside the exterior case (housing 20). The fuel cell module 1 is connected with the heat exchanger 104 for processing exhaust gas (Exhaust) discharged from the inside.

The exhaust generated from the fuel cell module 1 is introduced through an exhaust gas channel E into the heat exchanger 104. The heat exchanger 104 carries out heat exchange between the exhaust gas and a heat medium (water), so that the exhaust gas can be cooled down, whereas the heat medium can be heated under the heat of the exhaust gas. During cool-down, the water vapor contained in the exhaust gas is split into water and vapor by a moisture separator. The vapor is discharged through an exhaust vapor channel V out of a gas outlet (Vent).

The water separated from the exhaust gas is conveyed to the condensate water tank 106 through a condensate water collection channel C. In the condensate water tank 106 internally provided with an ion exchange resin, the condensate water is purified via the ion exchange resin, and then stored therein as reforming water. The reforming water is supplied to the reformer 101 for use in steam reforming for the raw fuel, whereas an excess of the reforming water is passed through the neutralization tank 107 containing a neutralizer, and then discharged through a drainage channel (D: drain).

The heat medium (such as tap water) is circulated successively through the heat storage tank 2, the heat dissipator 105, and the heat exchanger 104 via a heat-medium circulating pump P2. For example, tap water is stored in the heat storage tank 2. After being conveyed from the heat storage tank 2 to the heat dissipator 105, the heat medium is cooled down, and then conveyed to the heat exchanger 104. In the heat exchanger 104, the heat medium is heated under heat exchange with the exhaust. The heat medium (such as tap water) having an elevated temperature is refluxed into the heat storage tank 2. The heat storage tank 2 is connected with a hot-water supply pipe HW for delivering heated water (hot water) and a cold-water supply pipe CW for supplying water having a room temperature (cold water).

FIGS. 2 to 7 are drawings of the fuel cell device according to the embodiment, illustrating the housing with exterior panels removed to bring the internal structure of the device into view. In the following description of the embodiment, the X-axis direction from the front side of the installed fuel cell device 10 with the housing 20 (near side) to the back side (far side) thereof, as viewed in each drawing, will be referred to as a front-rear direction of the housing. Moreover, the Y-axis direction, looking from the foreside (front side) of the construction, will be defined as a right-left, or horizontal direction of the housing, and, the Z-axis direction from the top to the bottom of the construction will be defined as a vertical direction of the housing. Note that the vertical direction of the housing 20 (the Z-axis direction) may be also referred to as a longitudinal direction, and, planar directions perpendicular to the vertical direction (the X-axis direction and the Y-axis direction) may be also referred to as lateral directions of the housing.

FIGS. 2 and 3 show the voluminous and cumbersome fuel cell module 1 and heat storage tank 2 that are difficult to move within the housing and take out. The other parts such as auxiliary machines and piping and wiring arrangement for connecting the auxiliary machines are not shown in these drawings. The auxiliary machines, the piping and wiring arrangement, etc. are each disposed in a special area free of the fuel cell module 1 and the heat storage tank 2 as shown in FIGS. 2 and 3, or disposed in a gap between the fuel cell module 1 and the heat storage tank 2, for example.

As shown in FIG. 2, the fuel cell device 10 according to the embodiment includes the housing 20 composed of a frame structure 11 constructed of an assemblage of frames (including frames 12, 13, and 14) and exterior panels (including panels 21 to 25 and a bottom plate 26) that are each attached to corresponding one of the sides (six sides) of the frame structure 11. The housing 20 houses therein the fuel cell module 1 incorporating the cell stack, and a plurality of auxiliary machines that serve to assist the power-generating operation of the fuel cell module 1. For example, each exterior panel may be ribbed for strength increase.

The fuel cell device 10 requires regular maintenance checkup in accordance with the frequency of maintenance necessary for each auxiliary machines on an individual basis. However, for example, the fuel cell device 10 is commonly set in place without regard for the workability of maintenance operation by maintenance personnel, and thus, in some cases, the device is placed in a location where maintenance personnel have difficulty in performing maintenance operation, such as a narrow space.

In this regard, in the fuel cell device 10 according to the embodiment, the exterior panels, except at least two of them (that are, in this example, a right side panel 24 and a rear-side back panel 25), that is; a top panel 21, a front panel 22, and a left side panel 23, serve as a maintenance panel that can be detached during maintenance. As employed herein term "during maintenance" refers to the duration of component repair, component replacement, and component inspection, for example. Moreover, the term "detachable" may be expressed as "removable".

In the fuel cell device 10 according to the embodiment thereby constructed, as shown in FIG. 2, with the maintenance panels removed from the construction, maintenance personnel who take change of maintenance operation are able to check the placement positions, conditions, or connections of the individual auxiliary machines placed inside the housing 20 at a glance. Moreover, no matter where the fuel cell device 10 is placed, the auxiliary machines are ease of maintenance personnel's access during maintenance operation such as component replacement or repair. Thus, the fuel cell device 10 according to the embodiment may be said to have easy maintainability.

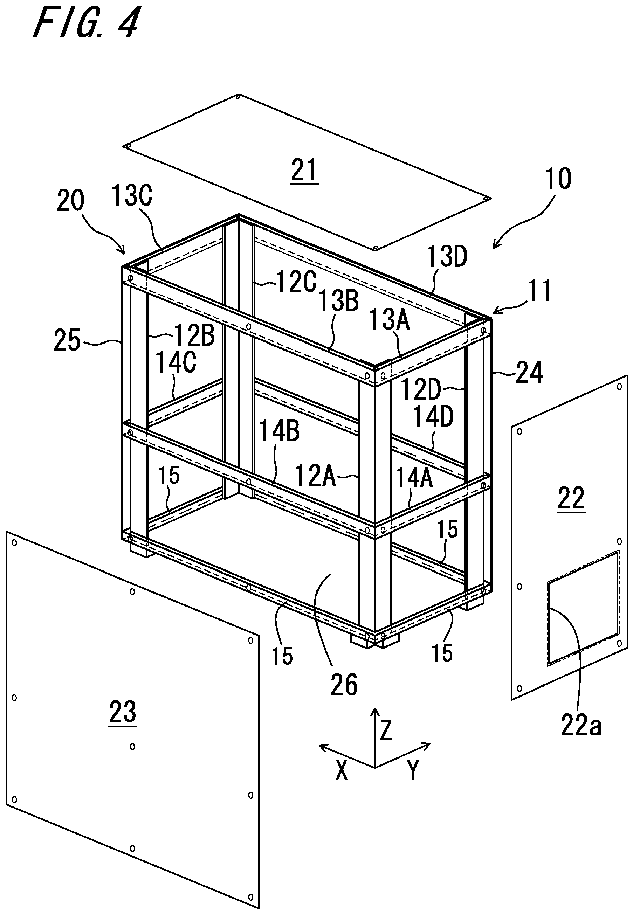

When the frame structure 11 is shaped in a hexahedron (rectangular prism) as shown in FIG. 4, the exterior panels attached to the frame structure 11 include a single top panel 21 and side panels, each constituting corresponding one of the sides of the housing 20. There are provided four side panels, namely the front panel 22, the left side panel 23, the right side panel 24, and the back panel 25. As described earlier, the top panel 21 and, of the aforenamed side panels, two adjacent panels (that are, in this example, the front panel 22 and the left side panel 23) are each made as a detachable maintenance panel.

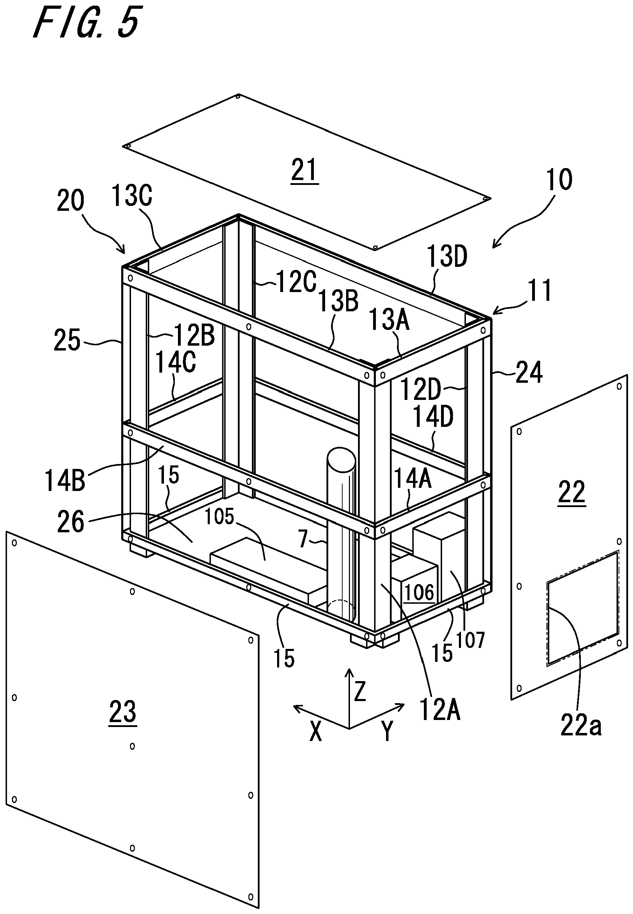

As shown in FIG. 5, in the fuel cell device 10 according to the embodiment, of the auxiliary machines, those that can be judged as deserving higher priority in maintenance based on predetermined criteria are each located closer to the front panel 22 or the left side panel 23, or located closer to the top panel 21.

For example, in FIG. 5, the condensate water tank 106 and the neutralization tank 107 are located closer to the front panel 22. On the other hand, the desulfurizer 7, the heat dissipator (heat radiator) 105, etc. are located closer to the left side panel 23. Note that the other auxiliary machines are omitted from the drawing. The auxiliary machines may be placed not only on the bottom plate 26 as described above, but also on the periphery or the top of the module 1. This allows efficient use of the upper space within the housing 20.

Such a structure enhances handy access to the auxiliary machine in need of maintenance. Moreover, for example, even when the fuel cell device is set in a narrow place or a location which is difficult of maintenance personnel's access, each and every auxiliary machine that is given higher priority in maintenance becomes easily accessible. This allows the fuel cell device 10 according to the embodiment to have greater maintainability.

The "auxiliary machines that can be judged as deserving higher priority in maintenance based on predetermined criteria" include at least all of auxiliary machines belonging to the following first group with the highest priority in maintenance, and may also include one or a plurality of auxiliary machines belonging to the second group with the second highest priority in maintenance, or may include all the auxiliary machines belonging to the first group and the second group.

Moreover, the "auxiliary machines that can be judged as deserving higher priority in maintenance based on predetermined criteria" may include one or a plurality of auxiliary machines other than those belonging to the first group and the second group, or all of such other auxiliary machines, and may also include piping arrangement, wiring arrangement, coupling arrangement, etc. for the connection of these auxiliary machines.

As employed herein the term "predetermined criteria" refer to criteria specified on the basis of maintenance frequency (maintenance interval) for operations such as inspection, repair, and consumable replacement. The criteria are determined properly with consideration given to maintenance frequency. An auxiliary machine that needs maintenance with a higher frequency, in particular, assumes a higher priority in maintenance.

To illustrate the criteria specified on the basis of maintenance frequency (maintenance interval), a component that needs to be replaced after a set period of time assumes a higher priority in maintenance. Examples of the component that needs replacing include an ion exchange resin that purifies condensate water and a component having a built-in desulfurization catalyst. A component that may become worn due to its own movement, such as a pump, or one that may seriously affect power generation when it malfunctions, even with the slightest failure, may also be given a higher priority in maintenance.

Thus, in this embodiment, the first auxiliary machine group with a high priority in maintenance includes the condensate water tank 106 containing an ion exchange resin, the desulfurizer 7 containing a desulfurization catalyst, the neutralization tank 107 containing a neutralizer, an air filter, etc.

Moreover, in this embodiment, the second auxiliary machine group with the second highest priority in maintenance includes pumps such as the reformed water pump P1 and the heat-medium circulating pump P2, the control substrate 5, sensors such as a flow rate sensor that measures the rate of flow of reformed water or fuel gas (not shown), etc. The auxiliary machines belonging to the first group or the second group are not limited to those as suggested in the description of the embodiment. In this embodiment, other auxiliary machines than those belonging to the first group and the second group include an electromagnetic valve (not shown), the heat dissipator (heat radiator) 105, the power conditioner 3, the heat exchanger 104, etc.

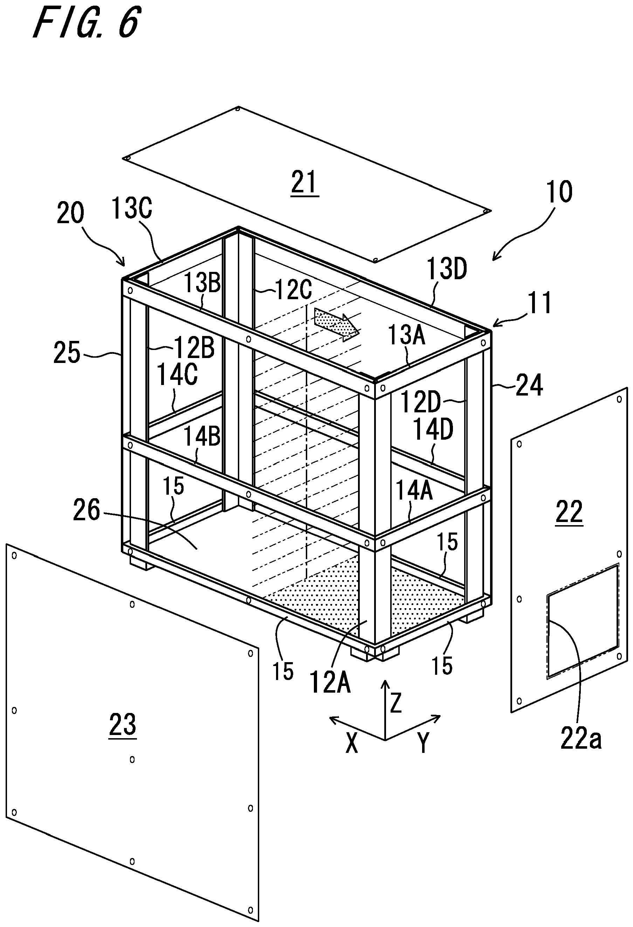

In the fuel cell device 10 according to the embodiment, the auxiliary machines that are given higher priority in maintenance are each disposed in a spatial region which is easy of maintenance personnel's access (represented by the dotted area of FIG. 6), that is; they are each located closer to the front panel 22 or the left side panel 23, or located closer to the top panel 21.

The "maintenance panel that can be detached during maintenance" translates to a panel that needs to be removed for access to each and every auxiliary machine that is given higher priority in maintenance. Thus, the right side panel 24 and the rear-side back panel 25, while being made as detachable panels, do not have to be removed during maintenance, that is; they are not used as maintenance panels.

FIG. 6 is an explanatory drawing showing the above-described region located closer to the maintenance panel (maintenance panel-side region) within the housing 20 in the embodiment. In this embodiment, the auxiliary machine that is given higher priority in maintenance can be placed in this maintenance panel-side region. The placement of the auxiliary machine in the maintenance panel-side region translates to the placement of the auxiliary machine in a spatial region located closer to the maintenance panel.

For example, in the fuel cell device 10 according to the embodiment (the housing 20), where a region located closer to the front panel 22 (maintenance panel-side region) is concerned, as shown in FIG. 6, given that the internal space of the housing 20 is divided into portions, then the maintenance panel-side region corresponds to one of the internal space portions which is located closer to the front panel 22 (a spatial region lying above the location represented by the dotted area). Expressed differently, given that the internal space of the housing is centrally divided into two equal portions in the front-rear direction (X-axis direction), then the maintenance panel-side region corresponds to one of the two portions which is located closer to the front panel 22 (spatial region). Alternatively, given that the internal space of the housing is divided into three equal portions in the front-rear direction (X-axis direction), then the region located closer to the front panel 22 (maintenance panel-side region) corresponds to one of the three portions which is located closest to the front panel 22 (spatial region).

Likewise, where a region located closer to the left side panel 23 (maintenance panel-side region) is concerned, given that the internal space of the housing is centrally divided into two equal portions in the horizontal direction (Y-axis direction), then the maintenance panel-side region corresponds to one of the two portions which is located closer to the left side panel 23 (spatial region). Alternatively, given that the internal space of the housing is divided into three equal portions in the horizontal direction (Y-axis direction), then the region located closer to the left side panel 23 (maintenance panel-side region) corresponds to one of the three portions which is located closest to the left side panel 23 (spatial region).

Likewise, where a region located closer to the top panel 21 (maintenance panel-side region) is concerned, given that the internal space of the housing is centrally divided into two equal portions in the vertical direction (Z-axis direction), then the maintenance panel-side region corresponds to that one of the two portions which is located closer to the top panel 21 (spatial region). Alternatively, given that the internal space of the housing is divided into three equal portions in the vertical direction (Z-axis direction), then the region located closer to the top panel 21 (maintenance panel-side region) corresponds to one of the three portions which is closest to the top panel 21 (spatial region).

Each of the above-described spatial regions refers to a space other than where large-size components (the fuel cell module 1 and the heat storage tank 2) are fixedly mounted, that is; a space capable of installation of auxiliary machines. This auxiliary installation space is left with consideration given to the dimensions (size) of each auxiliary machine, the relationship between different auxiliary machines that are mutually connected or function in a coordinated fashion, etc. Each of the large-size components (the fuel cell module 1 and the heat storage tank 2) is not located closer to the maintenance panel, but placed in a region located closer to the right side panel 24 or the back panel 25.

In the fuel cell device 10 according to the embodiment, as shown in FIG. 2, the front panel 22, which is one of the side panels, includes an easily-removable maintenance panel 22 main body, and a coupling panel 27, which can be separated from the maintenance panel 22 main body, for supporting a plurality of couplings 4.

The coupling panel 27 is smaller in lateral width (dimension in the Y-axis direction) and longitudinal length (dimension in the Z-axis direction) than the maintenance panel 22 (front panel 22).

With this structure, the maintenance panel (front panel 22) can be removed without removal of the coupling. Moreover, maintenance personnel are able to check the auxiliary machines through a gap between the coupling panel 27 and a longitudinal frame 12A, as well as to insert their hands into the housing 20 through the gap. Thus, this structural feature also improves the maintainability of the fuel cell device 10.

As shown in FIG. 4, the frame structure 11 constituting the housing 20 is assembled from individual frames, with the bottom plate 26 used as a base. There are provided longitudinal frames 12A, 12B, 12C, and 12D, each disposed in upstanding condition at corresponding one of the four corners of the bottom plate 26. Moreover, transverse frames 13A, 13B, 13C, and 13D are positioned at the top (upper) part of the frame structure 11, and transverse frames 14A, 14B, 14C, and 14D are positioned at the central (middle) part of the frame structure 11. Each transverse frame, which extends across corresponding adjacent longitudinal frames, is screwed (clamped), welded, or otherwise engaged to the longitudinal frames.

The transverse frames 13A, 13B, 13C, and 13D positioned at the top part support the top panel 21 provided as the upper surface (top) of the housing 20. Moreover, the transverse frames 14A, 14B, 14C, and 14D positioned at middle part support the front panel 22, the left side panel 23, the right side panel 24, and the back panel 25, each constituting corresponding one of the side surfaces of the housing 20. Reference numeral 15 denotes transverse frames surrounding the bottom plate 26 (corresponding to the lower part of the frame structure).

The respective longitudinal frames and transverse frames for supporting the removable maintenance panel (three panels that are, as exemplified, the top panel 21, the front panel 22, and the left side panel 23), which are, as exemplified, the longitudinal frame 12A, the transverse frames 13A, 13B, 14A, and 14B, etc., may be detachably mounted.

For example, as shown in FIG. 3, the upper transverse frame 13B and the middle transverse frame 14B, which constitute an obstruction to access to the auxiliary machines during maintenance, may be screwed or otherwise fitted for easy removal. This design enhances handy access to the auxiliary machine in need of maintenance.

The following describes the auxiliary machines placed (mounted) inside the housing 20.

In the fuel cell device 10 according to the embodiment, as one auxiliary machine that is given higher priority in maintenance as described above, the control substrate 5 for controlling the fuel cell module 1 is disposed inside the housing 20 as shown in FIGS. 2 and 3.

The housing 20 has a substrate holder 6 that holds the control substrate 5. The control substrate 5 is disposed, with its mounting surface equipped with an electronic component (not shown) that faces down (faces down in the vertical direction, and faces down in the Z-axis direction), on the inner side of the substrate holder 6.

The substrate holder 6 (substrate case) is shaped in a box having one opening surface. As shown in FIG. 2, the substrate holder 6 is mounted in the opening surface-downward fashion (cannot be seen in the drawing). Moreover, as described above, the control substrate 5 is mounted in the mounting surface-downward fashion within the downward recess of the substrate holder 6.

With this structure, even if condensation forms inside the housing 20 and the condensation (water) adheres to the inner side of the top panel 21, it is possible to reduce the adhesion or fall of the condensation (water) to the mounting surface of the control substrate 5, and thereby prevent occurrence of troubles such as corrosion in the electronic component.

The substrate holder 6 (substrate case) is coupled, at one side, to one of the transverse frames (which is, as exemplified, the upper transverse frame 13D) via a hinge member. Thus, the substrate holder 6 is pivotable about the transverse frame in the vertical direction (Z-axis direction) while keeping hold of the control substrate 5 therein. Moreover, the substrate holder 6 may be coupled to one of the longitudinal frames for pivoting motion in the horizontal direction (Y-axis direction).

This structure makes it possible to check the placement positions, conditions, or connections of the individual auxiliary machines placed inside the housing 20 from above the housing 20 without reducing (impairing) the maintainability-enhancing effect of the removal of the top panel 21. Moreover, the auxiliary machines are ease of maintenance personnel's access during maintenance operation such as component replacement or repair. In addition, this structure facilitates the inspection and replacement of the control substrate 5 in itself.

When the housing 20 is shaped in a hexahedron (rectangular prism), four side panels constituting the housing 20 (the front panel 22, the left side panel 23, the right side panel 24, and the back panel 25) may be grouped in two pairs, the panels in each pair being opposed to each other (the front panel 22 pairs up with the back panel 25, and the left side panel 23 pairs up with the right-hand side panel 24). An area of side panels in one of the two pairs (the pair of the front panel 22 and the back panel 25), or one of the front panel 22 and the back panel 25, differs from an area of side panels in the other pair (the pair of the right side panel 24 and the back panel 25), or, one of the right side panel 24 and the back panel 25. The substrate holder 6 is connected to the frame supporting the large-area side panel (which is, as exemplified, one of the transverse frames 13B and 13D defining long sides).

In this embodiment, the substrate holder 6 is connected to the transverse frame located closer to other side panel than the maintenance panel, namely the transverse frame 13D supporting the large-area side panel.

In this construction, the substrate holder 6 is pivotally mounted on the transverse frame 13D opposite to the maintenance panel. This allows easy removal of the transverse frame 13B located closer to the maintenance panel. Moreover, even during the pivoting motion of the substrate holder 6, access to the other auxiliary machines remains unhindered, in consequence whereof there results no impairment of easy maintainability.

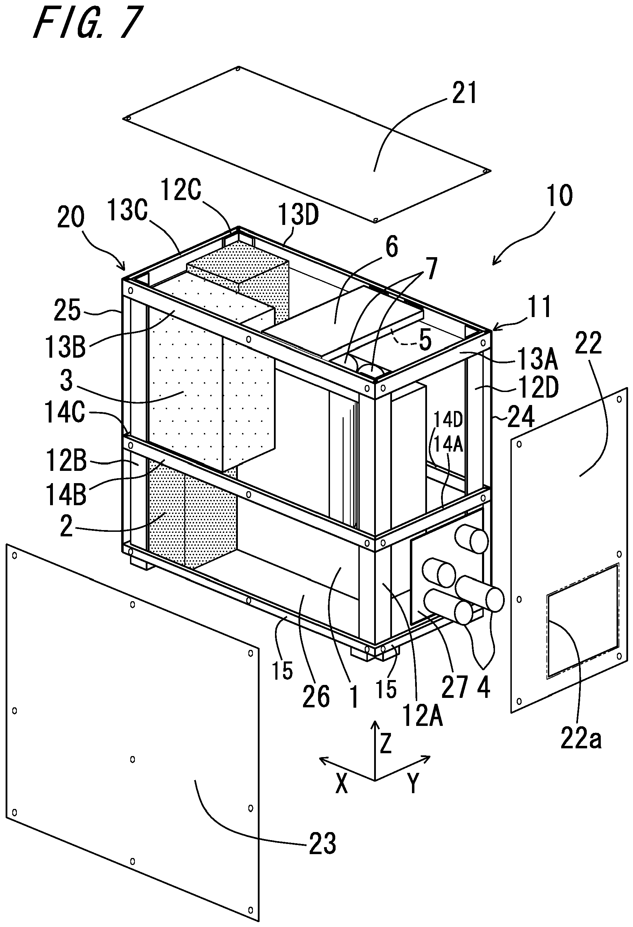

As shown in FIG. 7, the power conditioner 3 may be mounted so that it can be pulled upward out of the construction after the top panel 21 is removed.

As shown in FIG. 7, the desulfurizer 7 that needs maintenance with a relatively high frequency (a relatively high priority in maintenance), the number of which varies depending on where it is used, may be disposed near the front panel 22 and the left side panel 23 that serve as the maintenance panels. The number of the mounted desulfurizers 7 is, as exemplified, two, and, like the power conditioner 3, the desulfurizers 7 are mounted so that they can be pulled upward out of the construction after the top panel 21 is removed.

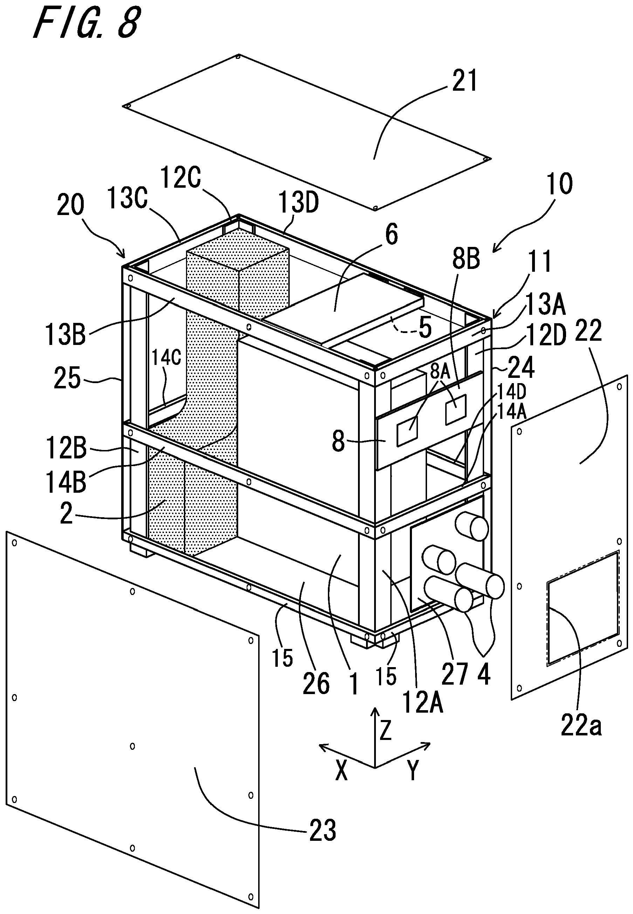

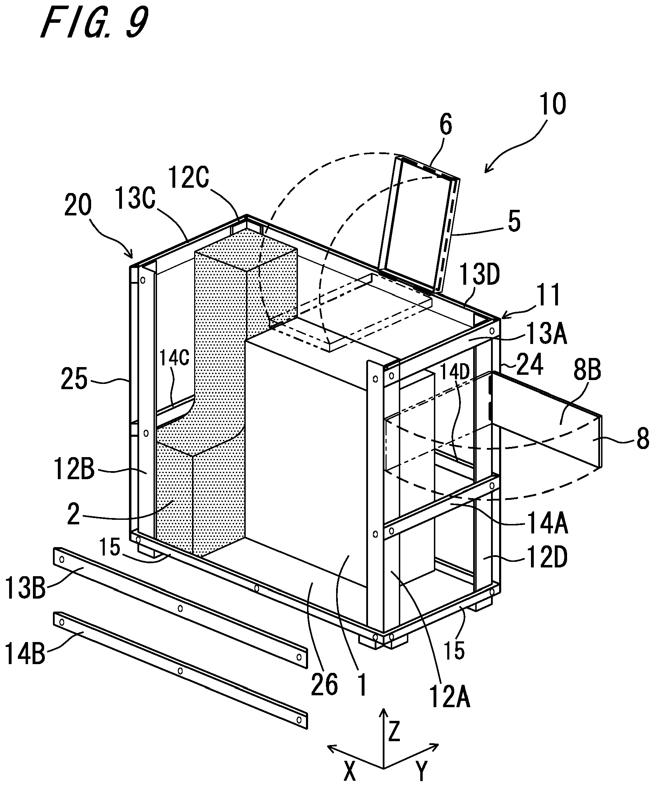

The following describes another auxiliary machine that is placed (mounted) inside the housing 20. In the fuel cell device 10 according to the embodiment, as another auxiliary machine, a breaker board 8 equipped with a breaker circuit 8A is disposed inside the housing 20 as shown in FIGS. 8 and 9. The breaker board 8, while being an auxiliary machine placed inside the housing 20, does not have to be included in the auxiliary machines that are given higher priority in maintenance.

For example, the breaker board 8 may be built either as a molded case circuit breaker or as an earth leakage circuit breaker. In the breaker board 8 built as a molded case circuit breaker, it is advisable to make the breaker circuit 8A capable of detecting and breaking an overcurrent resulting from an overload or short-circuiting. On the other hand, in the breaker board 8 built as an earth leakage circuit breaker, it is advisable to make the breaker circuit 8A capable of detecting and breaking an leakage current resulting from a fault. For example, the breaker board 8 is mounted in a power supply wiring between the power conditioner 3 and a load or storage battery. The breaker circuit 8A operates on detection of an electric current flowing through the power-supply wiring arrangement.

For example, the breaker board 8 includes a substrate 8B equipped with circuitry that is necessary as a breaker such as the breaker circuit 8A, which has the general form of a plate. Although the substrate 8B has, for example, a rectangular outside shape in the embodiment, it may be given another shape without limitation. The breaker circuit 8A is mounted on one or the other principal surface of the substrate 8B, or may be mounted on each of the principal surfaces.

The breaker board 8 is located closer to the front panel 22 serving as the maintenance panel. The substrate 8B is coupled, at one side, to one of the longitudinal frames (which is, as exemplified, the longitudinal frame 12D) via a hinge member. The longitudinal frame 12D is one of the frames that support the front panel 22. The breaker board 8 is pivotable about the longitudinal frame 12D in the horizontal direction (Y-axis direction). Moreover, the breaker board 8 may be coupled to one of the transverse frames, for example, the transverse frame 13A, for pivoting motion in the vertical direction (Z-axis direction). To illustrate an advantage accruing from the pivotability of the breaker board 8, during the operation of the fuel cell device 10, the breaker board 8 stays inside the frame while being covered with the front panel 22, whereas, during maintenance of the fuel cell device 10 at standstill with the front panel 22 removed, the breaker board 8 can be moved aside out of the frame.

This structure makes it possible to check the placement positions, conditions, or connections of the individual auxiliary machines placed inside the housing 20 from the front of the housing 20 without reducing (impairing) the maintainability-enhancing effect of the removal of the front panel 22. Moreover, the auxiliary machines are ease of maintenance personnel's access during maintenance operation such as component replacement or repair. In addition, this structure facilitates the inspection and replacement of the breaker board 8 in itself.

The breaker board 8 may be pivotably connected to, among the frames that support the small-area side panel, one of the longitudinal frames 12A and 12D that define long sides. In this embodiment, the breaker board 8 is connected to the longitudinal frame located closer to other side panel than the maintenance panel, namely the longitudinal frame 12D that supports the large-area side panel.

In this construction, the breaker board 8 can be pivotally moved away from that side of the housing 20 which has been opened on the removal of the transverse frames 13B and 14B, and thus, access to the other auxiliary machines remains unhindered, in consequence whereof there results no impairment of easy maintainability.

The breaker board 8 may be further provided with a switch or the like for manual closing or opening operation of the breaker circuit 8A. The switch may be mounted on any one of the outwardly facing surface and the inwardly facing surface of the substrate 8B staying inside the frame. In the case of mounting the switch on the outwardly facing surface, for example, a window may be formed in the front panel 22 to uncover the switch. In this case, even if the breaker circuit 8A is automatically opened due to an overcurrent, etc., for example, a user is able to close the circuit easily by hand without the necessity of removing the front panel 22. On the other hand, in the case of mounting the switch on the inwardly facing surface, the switch cannot be operated under the condition where the breaker board 8 stays inside the frame. In this case, when the breaker circuit 8A is automatically opened, after the removal of the front panel 22, the breaker board 8 is pivotally moved, so that the switch can be manually operated to carry out circuit closing operation. Thus, user's switch misoperation can be reduced, and, circuit opening operation is performed by maintenance personnel, which ensures the safety of operation.

The structures of the auxiliary machines placed inside the housing 20 of the fuel cell device 10 are not limited to those as suggested in the above-described embodiment.

The disclosure may be embodied in other specific forms without departing from the spirit or essential characteristics thereof. The present embodiments are therefore to be considered in all respects as illustrative and not restrictive, the scope of the disclosure being indicated by the appended claims rather than by the foregoing description and all changes which come within the meaning and the range of equivalency of the claims are therefore intended to be embraced therein.

### Reference Signs List

- 1:: Fuel cell module
- 10:: Fuel cell device
- 12A:: Longitudinal frame (detachable)
- 12B, 12C, 12D:: Longitudinal frame
- 13B:: Transverse frame (detachable)
- 13A, 13C, 13D:: Transverse frame
- 14B:: Transverse frame (detachable)
- 14A, 14C, 14D:: Transverse frame
- 20:: Housing
- 21:: Top panel (for maintenance)
- 22:: Front panel (for maintenance)
- 23:: Left side panel (for maintenance)
- 24:: Right side panel
- 25:: Back panel

## Claims

1. A fuel cell device, comprising:
a housing comprising a top panel and a plurality of side panels;
a fuel cell module disposed in the housing, the fuel cell module housing a cell stack that carries out power generation by utilizing a fuel gas and an oxygen-containing gas; and
a plurality of auxiliary machines disposed in the housing, the plurality of auxiliary machines assisting operation of the fuel cell module,
a plurality of panels among the top panel and the plurality of side panels, serving as a maintenance panel that can be detached during maintenance, at least two panels among the top panel and the plurality of side panels not serving as the maintenance panel.

2. The fuel cell device according to claim 1,
wherein the plurality of auxiliary machines comprise a first auxiliary machine that is given a higher priority in maintenance based on predetermined criteria during maintenance, and other auxiliary machines than the first auxiliary machine,
the housing is shaped in a rectangular prism comprising one top panel and four side panels,
the top panel, and, of the side panels, two adjacent side panels each serve as the maintenance panel, and
the first auxiliary machine is located closer to the maintenance panel.

3. The fuel cell device according to claim 1 or 2,
wherein the housing further comprises:
a plurality of longitudinal frames that support the top panel and the side panels; and
a transverse frame extending across the plurality of longitudinal frames, the transverse frame supporting at least one panel of the top panel and the side panels, and
at least one frame of the longitudinal frames and the transverse frame that support the maintenance panel is detachable.

4. The fuel cell device according to claim 3 depending from claim 2,
wherein a plurality of the first auxiliary machines comprise a control substrate that controls the fuel cell module,
the housing comprises a substrate holder that holds the control substrate,
the control substrate is configured so that one surface of the control substrate serves as a mounting surface on which an electronic component is mounted, and
the substrate holder is disposed inside the housing so that the mounting surface of the control substrate faces down.

5. The fuel cell device according to claim 3 or 4 depending from claim 2,
wherein the housing comprises a breaker board on which a breaker circuit that breaks an overcurrent or a leakage current is mounted, and
the breaker board is located closer to the maintenance panel.

6. The fuel cell device according to claim 5 depending from claim 4,
wherein at least one of the substrate holder and the breaker board is pivotably connected to the longitudinal frame or the transverse frame.

7. The fuel cell device according to claim 6,
wherein the four side panels are grouped in two pairs, side panels in each pair being opposed to each other,
an area of the side panels in one pair of the two pairs differs from an area of the side panels in the other pair, and
at least one of the substrate holder and the breaker board is connected to the transverse frame or the longitudinal frame that supports one panel of the pair of side panels having a larger area.

8. The fuel cell device according to claim 7,
wherein the substrate holder is connected to a transverse frame located closer to one side panel which is other than a side panel of the side panels of one pair that serves as the maintenance panel, and one side of the substrate holder serves as a pivot.

9. The fuel cell device according to any one of claims 1 to 8,
wherein one panel of the side panels serves as the maintenance panel, and comprises a coupling panel which can be separated from the maintenance panel and supports a coupling for a fluid flowing through an interior of the housing, and
the coupling panel is smaller in lateral width and longitudinal length than the maintenance panel.
